# EUROPEAN PATENT SPECIFICATION

(11) **EP 1 601 596 B1**
(45) Date of publication and mention of the grant of the patent: **23.05.2007**
(21) Application number: 03715344.2
(22) Date of filing: 12.03.2003
(51) Int. Cl.: B65G 57/28, B65G 59/08, B65G 60/00, B28D 7/04, B65G 47/91

(54) **TOP FRAME HANDLER FOR STONE SLABS**
EINE OBERHALB AN EINEM GESTELL ANGEORDNETE HANDHABUNGSVORRICHTUNG FÜR STEINPLATTEN
DISPOSITIF DE MANIPULATION DE CADRE SUPERIEUR POUR DALLES EN PIERRE

(43) Date of publication of application: 07.12.2005
(73) Proprietor: Pedrini, Luigi, 24060 Carobbio Degli Angeli (Bergamo) (IT)
(72) Inventor: Pedrini, Luigi, 24060 Carobbio Degli Angeli (Bergamo) (IT)
(74) Representative: Spera, Maria Caterina
(86) International application number: PCT/IT2003/000151
(87) International publication number: WO 2004/080861

(56) References cited:
- EP-A- 1 219 398
- JP-A- 59 057 822
- US-A- 3 126 108

## Description

The invention relates to an aerial handler for stone slabs to load and/or unload said slab from the processing line, i.e. an automated device for handling large stone slabs in order to load/unload them onto/from a slab processing line, according to the preamble of claim 1.

The state of the art provides several types of slab handlers, wherein a suction cup device is moved to and from roller beds associated with a processing machine in the processing line in order to transfer the slabs to and from slab storage areas and load/unload them onto/from the transport system of the machine itself. Some of these slab handlers operate to reorient the packed slabs in mating vein pairs.

Conventional slab handlers generally comprise a suction-cup carrying arm which can be moved transversally and/or longitudinally of the roller bed, as well as lifted and lowered, to lay down or pick up the slabs onto/from the roller bed. The suction-cup carrying arm is supported on a truck, or truck pair, adapted to be moved between a slab storage area and the roller bed associated with the processing line. The suction cups can be positioned to the upper-side or the underside of the roller bed preparatory to engaging one of the slab faces. When positioned underneath, the suction cups normally enter the roller bed to load before or unload after the slab is in the loading position, or withdraw from it after an unloaded slab has been delivered at the speed of the processing machine. This is a time-consuming procedure that has been corrected by providing, between the slab handler and the machine, two-speed roller transports which can shift the slabs from the roller bed of the slab handler to said transport at a high rate, and then feed them to the machine at a standard rate. In this way, the slab handler is kept engaged for a shorter time, and its working cycle improved. The additional transport can be used to unload the slabs from the processing line by changing its working sequence.

Known in the art is a slab handler which comprises a suction cup-carrying surface adapted to be tilted to a subvertical position from a horizontal one, and beyond a vertical position toward a comb-like roller bed which is also tiltable to the same slant angle- The suction cup-carrying surface is mounted on a truck that runs horizontally to/from the roller bed on floor-mounted runways, axially with respect to the rollers, so that it can enter said roller bed with its rows of suction cups inserted between rows of the comb-like arranged rollers.

While this prior slab handler allows the lengths of the roller beds upstream and downstream of the machine to be minimized, the truck design is a weaker construction due to the truck being a much smaller size than the slab.

Known in the art is, also, a plate handler disclosed by JP-A-59057822 showing an aerial handler for work plates adapted to load/unload said works to/from a work processing line, comprising: a set of suction cups, for suction engagement with one of the work plate in order to pick up/laid down the work plate from/into a plate storage area; two overhead guides along which a transport truck of the work plate handler is moved; an actuator for setting the plate handler elevation; a device for pivoting a suction cup-carrying frame about an horizontal axis; a powered roller device for delivering the work plate onto/from the work processing line where two handler of such type are moved onto/from the processing line to speed up operations.

Another type of slab handler provides a comb-like roller bed in combination with said truck-mounted handler. The suction cup-carrying arm enters the roller bed sideways, parallel to it, to lay the slab down onto the rollers and withdraw along the same direction. Once the truck, arm and suction cups are moved away, the slab is fed to the machine.

Finally, in the above slab handlers, the slab tilting/turning movements relative to the arm or the fulcrum point of the tiltable suction cups are subject to the weight of the slab, which hinders fast movements. Also, the slab handlers rely on trucks which move on ground-level rails to support the suction cup carrying arm, and consequently the trucks are unstable, i.e. they tend to tilt or tip over; there are safety problems for workers due to the risk of being hit or crushed; there are maintenance problems due to the need to remove debris from between the wheels and the runways; and there are additional space requirements on the ground because the runways must be laid out of reach of the revolving loading/unloading platform.

The state of the art is susceptible to improvement in terms of a slab handler that would overcome the drawbacks of conventional slab handlers.

The technical problem to be solved is, therefore, one of providing a balanced slab handler of light, yet strong construction, adapted to leave the space between the roller beds and the slab processing machine uncluttered, which also operates in a quick and deft manner.

Another object is to provide a slab handler as above, whose working rate is unrelated to that of the slab processing machine, and whose area requirements are reduced.

A further object is to provide for the slabs to be handled such that the bottom edges of the slabs are aligned in the loading area, and then discharged in the same aligned arrangement onto a pallet.

The above technical problem is solved by the invention as defined in the appended claim 1.

In a preferred embodiment, said suction cup-carrying frame is a box-type construction.

In a preferred embodiment, the actuator comprises a pair of actuating mechanisms, each mechanism being operated for synchronous action at the end of said suction cup-carrying frame.

In another preferred embodiment, each actuating mechanism is hinge connected to the suction cup-carrying frame for pivotal movement about a horizontal axis which lies perpendicularly to the pivot axis of the frame.

In a further embodiment, the powered roller device comprises a roller bed whose rollers are arranged comb-like and, when the slab is being picked up or put down, intersect the rows of suction cups on said cradle-like frame of the slab handler, said frame nesting crosswise under said comb-like rollers.

In another preferred embodiment, said roller bed of comb-like rollers includes a washer base mounted to perform at least a half-turn about a vertical axis.

In another preferred embodiment, the actuator for lifting/lowering the slab handler with respect to said comb-like roller bed has a recumbent U-shaped upright on the side where the slab is moved to/from the processing line over the roller bed.

In another embodiment, the raising/lowering actuator has guides located at a higher level than the opposite side actuator for sheltering said U-shaped upright.

In another preferred embodiment, the powered roller device comprises a roller bed having two sets of rollers whose axes cross one another, wherein the roller set having their axes parallel to the workline are movable from a raised position above the processing line to a retracted position below the processing line; the roller sets being rotated at different phases to produce the load/unload movement by the movable rollers and the processing line feed movement by the rollers level with the processing line; the cradle-like suction cup-carrying frame of the slab handler is provided with a set of powered rollers whose axes extend parallel to the movable rollers of said crossed roller bed; and said suction cups can travel at least a short distance along a normal direction to the plane containing them.

In another preferred embodiment, said roller bed with crossed rollers has a fifth wheel for pivotal movement about a vertical axis.

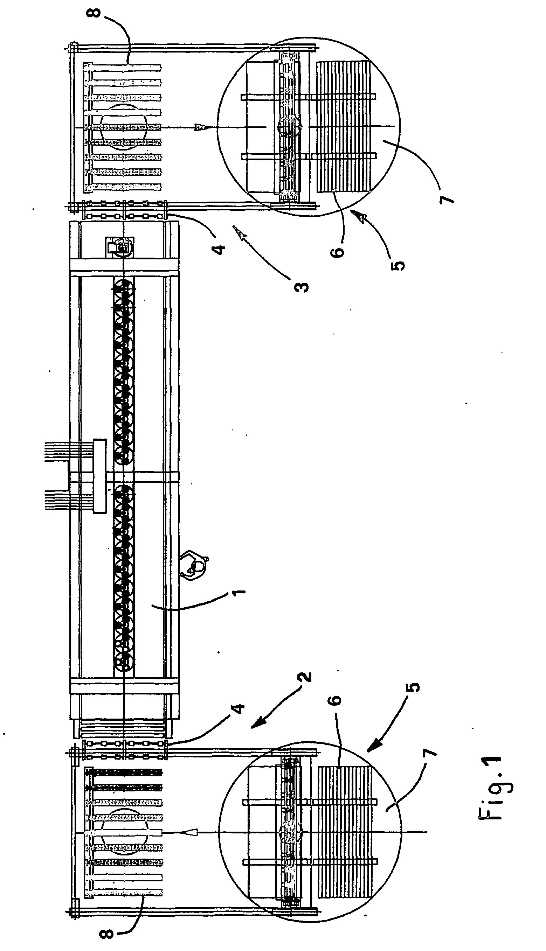

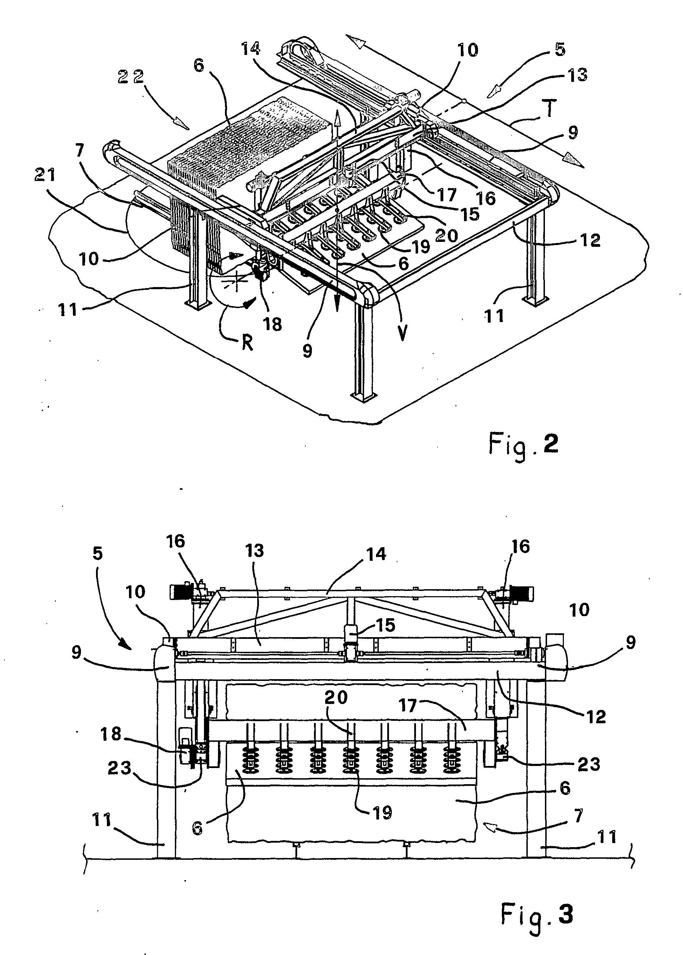

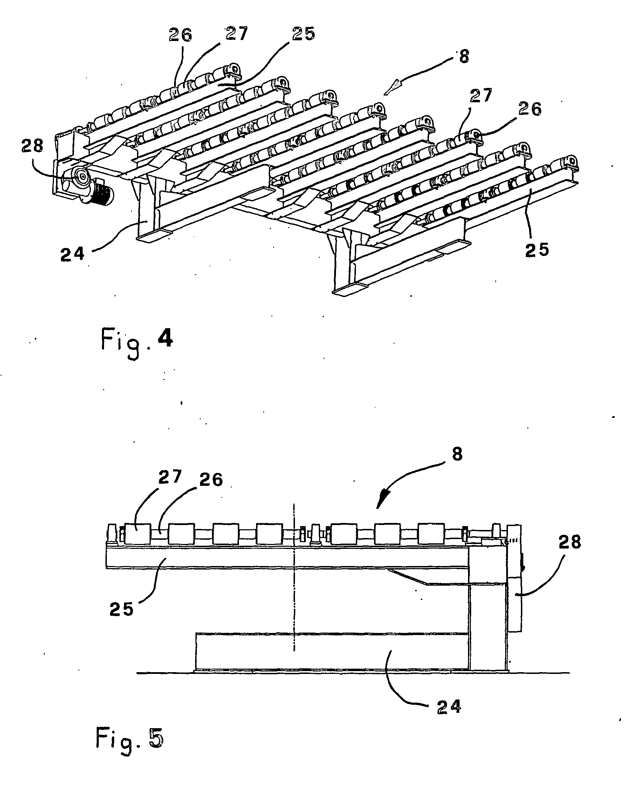

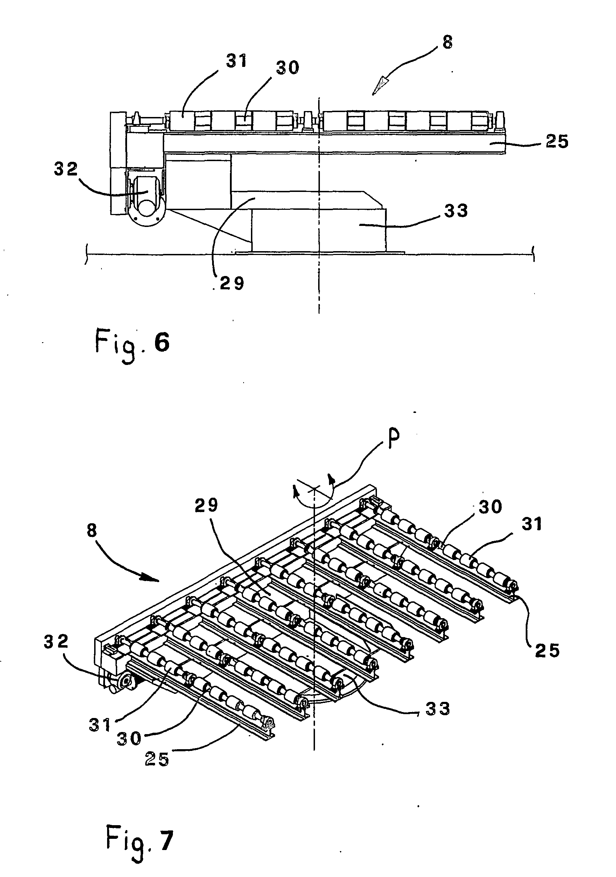

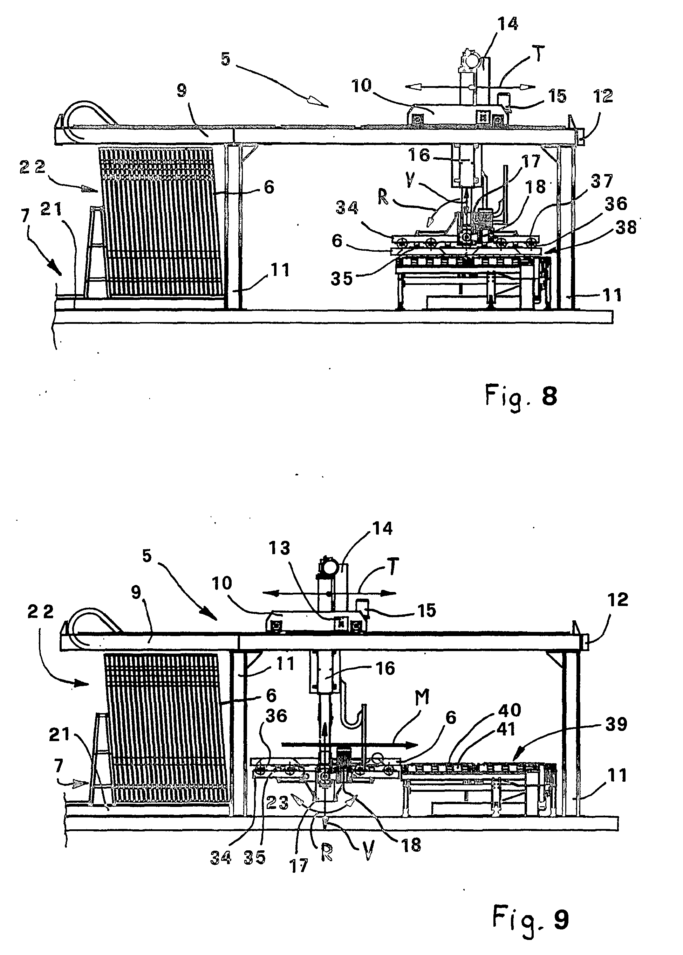

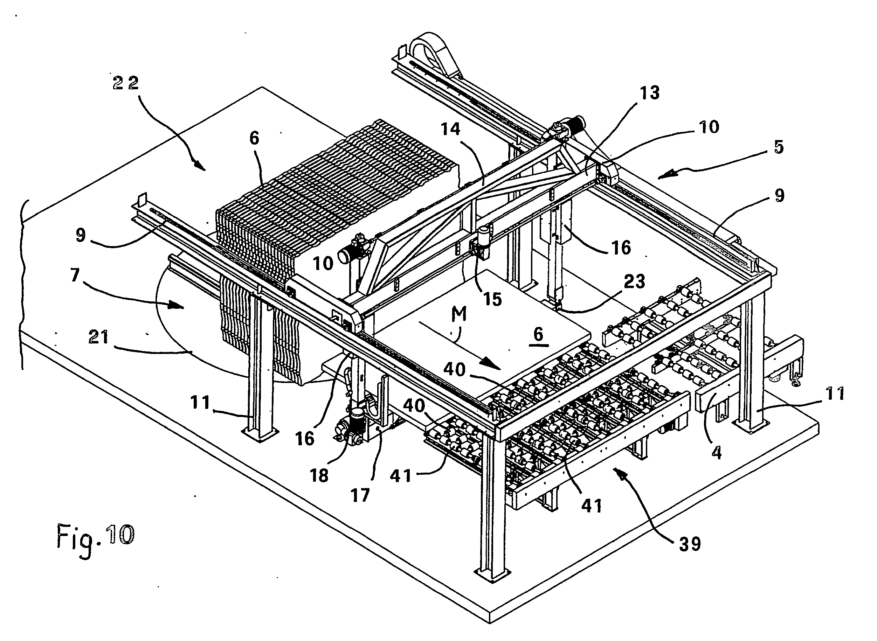

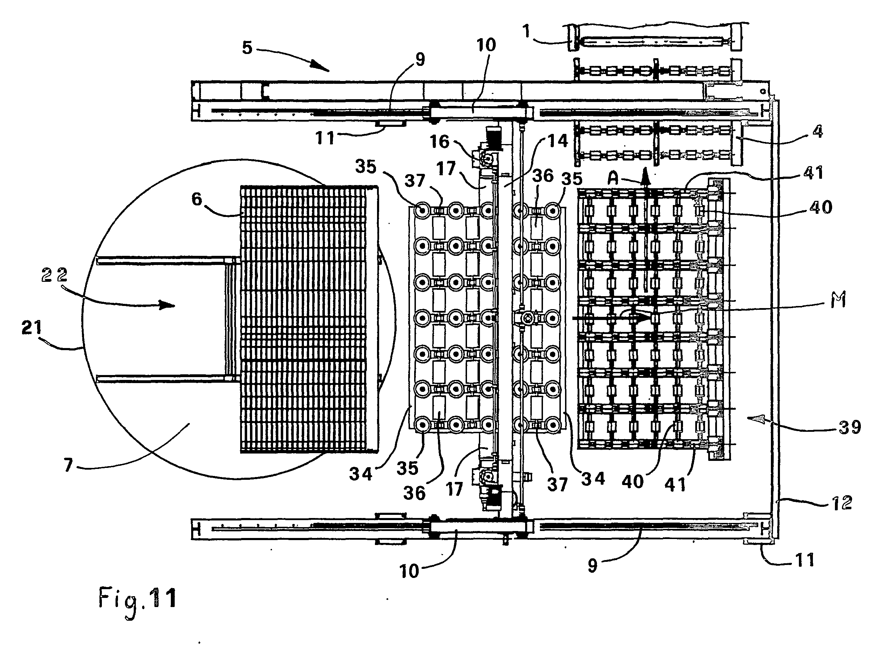

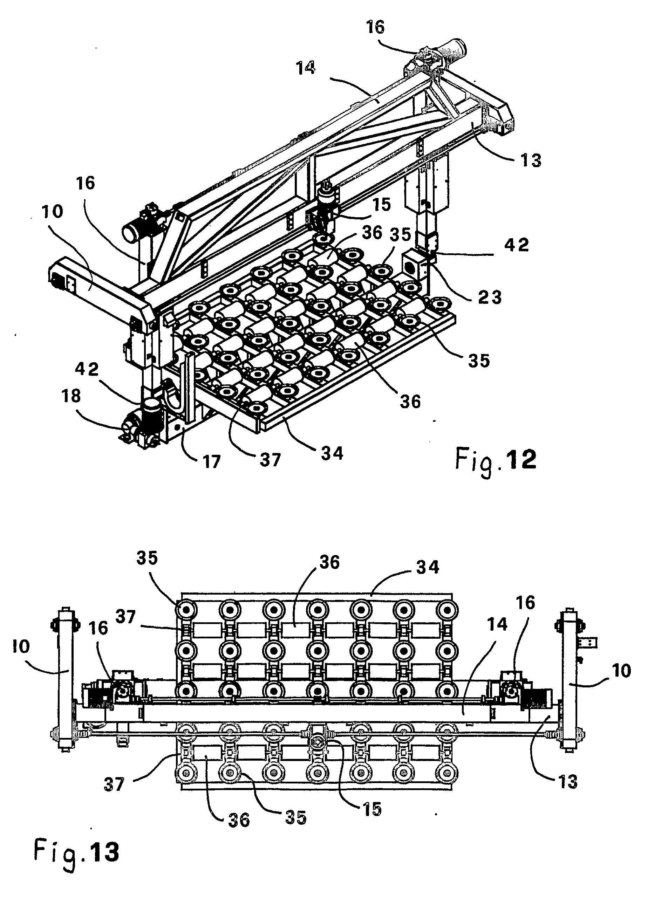

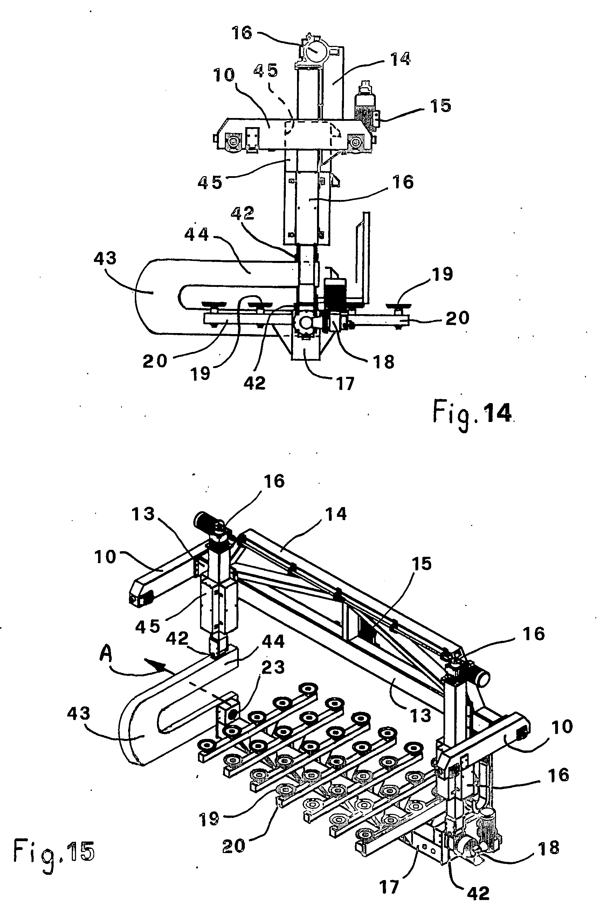

Embodiments of the invention are shown, by way of example only, in the accompanying nine drawings, where: Figure 1 is a plan view of two slab handlers, one with loading function and the other with unloading function, serving a slab processing machine, according to the invention; Figure 2 is a perspective view of the supporting structure for the aerial slab handler with the slab pick-up/lay-down roller bed omitted for clarity; Figure 3 is a view looking from the roller bed side along the direction of the guides of the aerial slab handler; Figure 4 is a perspective view from below of the comb-like roller bed highlighting the metal construction thereof; Figure 5 is a view taken in the direction of movement of the roller bed shown in Figure 4; Figure 6 is a view of the comb-like roller bed, revolving about a vertical axis through its center of gravity, taken in the direction of movement of the roller bed; Figure 7 is a perspective view from above of the revolving roller bed shown in Figure 6; Figure 8 is a side view in the direction of the guides for the aerial slab handler, in a version where the rollers and suction cups are mounted on the same slab handlers, the latter being shown in a pick-up/lay-down position relative to the roller bed; Figure 9 is a side view similar to Figure 8, with the aerial slab handler in the act of conveying a slab to the roller bed, the roller bed being here equipped with two sets of power-driven crossed rollers; Figure 10 is a perspective view from above of the aerial slab handler shown in Figure 9; Figure 11 is a plan view of the aerial slab handler shown in Figure 9; Figure 12 is a separate perspective view of the aerial slab handler equipped with sets of suction cups for picking up slabs and with sets of powered rollers for moving the slabs to/from said crossed roller bed; Figure 13 is a separate plan view of the aerial slab handler; Figure 14 is a side view, looking from the processing machine side, of the slab handler with suction cups and of the recumbent U-shaped upright for passing the slabs with the slab handler set to the comb-like roller bed for picking up/laying down slabs; and Figure 15 is a perspective view of the slab handler shown in the preceding figure.

Figure 1 shows a processing machine 1 for processing the stone slabs, with which a loading station 2 and an unloading station 3 for loading/unloading slabs onto/from the line 4 are associated. The size of the plant is substantial, since slabs with a surface area of about 6 square meters and a few centimeters thick have to be handled. The stations are equipped with an aerial slab handler 5 for handling the slabs 6, the latter being moved and simultaneously pivoted about a horizontal axis through their centers of gravity as they are conveyed from storage areas 7 to the roller beds 8 for picking up/laying down the slabs by said aerial slab handler. It can be seen that the roller beds of the line 4 can easily be located adjacent to the pick-up/lay-down roller bed 8.

Figure 2 shows the overhead guides 9 for the truck 10 of the slab handler 5. The guides are supported on pillars 11 standing outside the paths of travel between the roller beds and the storage area 7. At least one crossmember 12 joins said guides 9 together near the roller bed. The metal structure of the slab handler comprises a beam 13 joining said trucks 10 together, and an upper stiffening structure 14, in order to avoid cluttering the slab transport area. The aerial slab handler is driven by a gear motor 15 and associated drive to perform a travel movement T along said guides. The slab handler is provided with a pair of actuators 16 for moving the rotary box-type frame 17 in a vertical direction V. The frame is driven by the gear motor 18 to effect a pivotal movement R about an axis lying close to the combined center of gravity of the slab 6 and frame 17. The slab handler 5 is provided with suction cups 19 for picking up the slab 6, which suction cups are mounted on crosspieces 20 of said box-type frame 17. The storage area 7 is provided with a revolving platform 21 to move a completed slab pack 22 to/from the warehouses. Shown in Figure 3 are stub shafts 23 on which said box-type frame 17 is supported pivotally, the shafts 23 extending for a short distance between the roller beds, on the side of the line roller bed 4.

Figures 4 and 5 show the construction of the comb-like roller bed 8 to include a stationary structure 24 that mounts brackets 25 supporting pivot shafts 26 with rollers 27 that are driven by the gear motor 28. As a slab is being picked up/laid down from below, said brackets 25 will intrude between crosspieces 20 carrying the suction cups 19, and the box-type frame 17 will nest between the brackets 25 and the structure 24 beneath. Figures 6 and 7 similarly show a comb-like roller bed 8 with a rotary structure 29, effecting a pivotal movement P and mounting said brackets 25, pivot shafts 30, and rollers 31 driven off the gear motor 32. Additionally to causing said brackets to intrude between the crosspieces 20 as a slab is being picked up/laid down, the structure 29 performs at least half a revolution on a fifth wheel 33 in order to allow the bottom edges of the slabs to be aligned in the loading area, and enable the same alignment to be retained as the slab packis discharged onto a pallet, in conformity with the original layout of the stone within the pack. Likewise, as a slab is being picked up/laid down from below, said brackets 25 will intrude between crosspieces 20 carrying the suction cups 19, and the box-type frame 17 nest between the brackets 25 and the rotary structure 29 and fifth wheel 33 beneath.

Figure 8 shows the slab handler as provided with a flat frame 34 which, additionally to the movable suction cups 35, carries a set of powered rollers 36 mounted on stub shafts 37 and located close to the plane containing said suction cups 35, with their axes parallel to the feed direction A of the slabs on the pick-up/lay-down roller bed. After laying the slab 6 onto the roller bed 38, the slab handler is ready to continue its cycle, and the slab can be fed to the processing machine. In this way, the suction cup application face of the slab is processed, or has been processed. When only the suction cup application face is processed, it is unnecessary for the roller bed 38 to be provided with two crossed powered roller sets.

Figure 9 shows the slab handler with the flat frame 34 in the act of transferring M a slab 6 onto the crossed roller bed 39 for processing the face of the latter away from that of application of the suction cups 35. Once the powered rollers 36 of the flat frame 34 are brought to co-planarity with the rollers 40, whose axes lie parallel to the powered rollers 36, the slab is transferred onto said roller bed 39. The vertically movable rollers 40 are lowered to put the slab 6 down onto the powered rollers 41 having normal axes to the former, thereby switching the slab direction of travel to a direction toward the roller bed 4 of the processing line. Figure 12 shows the hinge connection 42 about a normal axis to the shafts 23, which allows sufficient freedom of up-and-down movement to prevent distortion of the box-type frame 17.

Figures 14 and 15, show the recumbent U-shaped upright 43 provided on the slab leading end A of the comb-like roller bed 8 to allow the slab through while the upright of the slab handler still locates between said roller bed and the line 4. In this case, the position of the R pivot shaft 23 of the box-type frame 17 and associated suction cups 19 is not required to locate below the slab being moved in the feed direction A to the processing machine 1, and it will suffice if the movement A is effected after the down movement is completed, i.e. when the U-shaped upright presents its open end to the edge of the slab 6. Likewise, the hinge connection 42 on said U-shaped upright is connected to the upper leg 44 of the upright 43. Also, the actuator 16 is provided with guides 45 at a higher level than the actuator on the opposite side for the purpose of sheltering said U-shaped upright 43. With this U-shaped upright, the rate of movement A can be made to match the rate of the processing machine, without restricting the slab handler mobility with a compulsory withdrawal from the comb-like roller bed before the leading edge of the slab 6 interferes with the upright position.

The slab handler of the invention shown in Figures 2 to 7 operates as follows. The slab pack 22 is laid onto the turntable 21 and moved into the working area of the slab handler 5. Using the suction cups 19, the slab handler picks up a slab 6 from the pack, moves it along the direction T, turns it in the direction R to present it with its face to be processed upward, and puts the slab down onto the rollers 31 with a downward movement V. Thus, the roller bed can deliver the slab to the processing machine at the same rate as the machine processing rate.

Where the face of the slab to be processed is that away from the application side of the suction cups 19, the roller bed 8, in its stationary embodiment of Figures 4 and 5 or in its rotary embodiment of Figures 6 and 7, will receive the crosspieces 20 of the slab handler between the supporting brackets 25 of the rollers 31. Thus, the slab 6 can be fed forward over the roller bed 8 at a consistent rate with that of the processing machine, and this only after the upright carrying the slab handler 5 is removed from the processing machine side.

Furthermore, when the slabs are to be aligned along their bottom edges during the loading phase to the line, or to retain their alignment in the pack on the revolving platform 21 in conformity with the original arrangement of the stone within the block, during unloading, the roller beds 8 are provided with the fifth wheel 33 for turning the slab right or left with the roller bed. This allows the slabs to be oriented as desired as they are loaded onto the line, and to pick them up from the line in a definite orientation for deposit onto the revolving platform 21. By using two comb-like roller beds 8, both of which are mounted pivotally on a fifth wheel, maximum freedom is achieved in the slab lay-down/pick-up cycle to/from the slab processing line.

The embodiment of the slab handler shown in Figures 8 to 13 operates similarly to the previously described embodiment, with some modifications. The slab 6 engaged by the moving suction cups 35 is put down onto the roller bed 39 with two crossed sets of rollers 40, 41 to enable the slab to be received/delivered by the slab handler with a coplanar movement M and then fed to the processing machine 1 with a forward movement A along a normal direction to the former. Thus, the crossed roller bed 39 and the slab handler with the set of powered rollers 36 whose axes extend parallel to the direction A of movement along the line allow the slab to be handled using no stationary or rotary comb-like roller bed, and prevent the slab handler upright from interfering on the processing machine side.

The suction cups 35 are allowed a slight axial movement in order to engage the surface of the slab 6 without urging it against the roller set 36. In the position shown in Figures 9 and 10, the slab 6 is being laid onto the rollers 36 and imparted the movement M toward the roller bed 39 by the rollers 36 onto the corresponding rollers 40 at their maximum upward reach. The rollers 40 are then moved down to load the slab 6 onto the rollers 41, having normal axes to the former which extend parallel to the working roller bed of the processing machine 1.

Thus, the slab handler is allowed to produce a fast movement M on the rollers 36 and 40, the next movement A on the rollers 41 and the machine rollers taking place comfortably at the working rate of the machine. At the end of the movement M, the slab handler will continue cycling without being compelled to wait for the slab 6 to be discharged from the roller bed 39.

Where the layout of the slab handlers is other than that shown in Figure 1, i.e. with the overhead guides 9 parallel to the direction of the line 1, the fifth wheel-mounted roller bed 33 is needed for the feed movement A to occur along a parallel direction to the loading/unloading movements T/M of the slab handler 5.

Finally, the embodiment of the slab handler shown in Figures 14 and 15 operates similarly to the previously described one having the comb-like roller beds 8. However, in this case the slab handler 5 needs not be withdrawn after laying the slab 6 onto the roller bed 8, and the movement A at machine rate can be started immediately after the slab is laid down, or alternatively, the slab handler may be pre-positioned to unload the slab from the roller bed with the slab 6 moving at a slower speed than the slab handler from the machine 1 to the roller bed 39, at the line discharge end. In this way, the movement T of the slab handler is made independent of the presence of a slab 6 on the roller bed 8, and is only tied to the slab handler carrying or not carrying said slab.

The advantages of this invention are: the aerial construction of the slab handler 5 is safer and steadier, viz. is prevented from tipping over because the guides 9 are mounted overhead and the weight of the slab handler and slab 6 develops no tendency to tip over; also, the overhead guides eliminate all safety problems; no maintenance problems are incurred from fragments of the slabs 6 being dropped while being moved around; floor area occupation is unrestricted because the guides may be mounted within the load/unload revolving platform, as shown in Figure 1.

In addition, the box-type construction of the frame 17 allows the center of gravity of the frame and slab combination to be held as close as possible to the horizontal pivot axis R. Accordingly, the construction of the slab handler can be uniquely light and stiff, since it can grow upward, where the overall dimensions put no constraints on the working area of the line.

Not least, by suspending the box-type frame 17 from two hinge connections 42, any slight offset in the operation of the slab handler lifting and lowering actuators 16 can be accommodated.

Furthermore, in the embodiment comprising the U-shaped upright 42, the successive timing phases between the movement T of the slab handler and the feed movement A are made fully independent, but the slab handler remains constrained in movement T only by the fact that it is carrying or not carrying a slab 6.

Finally, in the embodiment having the roller bed 39 comprised of two sets of crossed rollers 40 and 41, wherein the slab handler is equipped with axially moving suction cups 35 and rollers 36, the slabs may be handled without a comb-like roller bed 8 having to be provided.

In practice, the materials, dimensions and certain details may be different from the ones indicated, but they are technically equivalent and therefore do not go beyond the legal scope of this invention as defined in the appended claims.

## Claims

1. An aerial handler (6) for stone slabs adapted to load/unload said slabs to/from a slab processing line (1), comprising: a set of suction cups (19) for suction engagement with one side of a slab (6) in order to pick up/lay down the slab from/into a slab storage area (7); two overhead guides (9) along which a transport truck (10) of the slab handler is moved; an actuator for setting the slab handler elevation; a device (18) for pivoting a suction cup-carrying frame (17) about a horizontal axis; a powered roller device (8, 39) for receiving and delivering the slab onto/from the slab processing line; **characterized in that** said frame (17) is a cradle-like configuration adapted to locate said suction cups (19), and the slab (6) engaged therewith, close to the horizontal pivot axis (R), i.e. close to the combined center of gravity of the slab and the suction cup-carrying frame.

2. An aerial slab handler according to the preceding claim, **characterized in that** said suction cup-carrying frame (17) is a box-type construction.

3. An aerial slab handler according to one of the preceding claims, **characterized in that** the actuator comprises a pair of actuating mechanisms (16, 45), each mechanism being operated for synchronous action on the end of said suction cup (19) carrying frame.

4. An aerial slab handler according to the preceding claim, **characterized in that** each actuating mechanism (16) is hinge connected (42) to said frame for pivotal movement about a horizontal axis extending perpendicularly to the pivot axis (R) of the suction cup-carrying frame (17).

5. An aerial slab handler according to one of the preceding claims, **characterized in that** the powered roller device (28, 32) comprises a roller bed (8) having rollers (27, 30) arranged comb-like (25), and that, as the slab is being picked up or put down, said comb-like rollers intersect the rows of suction cups (19) on said cradle-like frame (17) of the slab handler, said frame nesting crosswise under said comb-like rollers (25).

6. An aerial slab handler according to preceding Claim 5, **characterized in that** said roller bed (8) of comb-like rollers (25) includes a fifth wheel (33) mounted to perform at least a half-turn (P) about a vertical axis.

7. An aerial slab handler according to either preceding Claim 5 or 6, **characterized in that** the actuator (16) for raising/lowering the slab handler (5) with respect to said comb-like roller bed (8, 25) has a recumbent U-shaped upright (43) on the side where the slab is moved to/from (A) the processing line (1) over the roller bed.

8. An aerial slab handler according to preceding Claim 7, **characterized in that** the raising/lowering actuator (16) has guides (45) located at a higher level than the opposite side actuator for sheltering said U-shaped upright (43).

9. An aerial slab handler according to one of preceding Claims 1 to 4, **characterized in that** the powered roller device comprises a roller bed (39) having two sets of rollers (40, 41) whose axes cross one another, wherein the roller set (40) having their axes parallel to the workline are movable from a raised position above the line (1) to a retracted position below the line; the roller sets (40, 41) being rotated at different phases to produce the load/unload movement (M) by the movable rollers (40) and the feed movement (A) of the line (1) by the rollers (41) level with the line; the cradle-like suction cup-carrying frame (17) of the slab handler is provided with a set of powered rollers (36) whose axes extend parallel to said movable rollers (40) of said crossed roller bed (39); and said suction cups (35) can travel at least a short distance along a normal direction to the plane containing them.

10. An aerial slab handler according to preceding Claim 9 **characterized in that** said crossed roller bed (39) is provided with a fifth wheel for pivotal movement about a vertical axis.

## Patentansprüche

1. Schwebe-Handhabungsvorrichtung (6) für Steinplatten zum Be- und Entladen der Platten auf eine bzw. von einer Plattenbearbeitungsstraße (1), umfassend: einen Satz von Saugnäpfen (19) für den Saugeingriff mit einer Seite einer Platte (6), um die Platte von einem Plattenspeicherbereich (7) aufzunehmen oder in den Plattenspeicherbereich abzulegen; zwei oben liegende Führungen (9), entlang derer ein Transport-Laufgestell (10) der Plattenhändhabungsvorrichtung bewegt wird; einen Aktuator zum Einstellen der Höhe der Plattenhandhabungsvorrichtung; eine Vorrichtung (18) zum Drehen eines Saugnapftragrahmen (17) um eine horizontale Achse; eine angetriebene Rollenvorrichtung (8, 39) zur Aufnahme und Abgabe der Platte auf die bzw. von der Plattenbearbeitungsstraße; **dadurch gekennzeichnet, dass** der Rahmen (17) eine wiegenartige Anordnung ist, die ausgelegt ist, die Saugnäpfe (19) und die damit gehaltene Platte (6) in der Nähe der horizontalen Drehachse (R), das heißt, in der Nähe des gemeinsamen Schwerpunktes der Platte und des Saugnapftragrahmen, zu halten

2. Schwebe-Handhabungsvorrichtung gemäß dem vorstehenden Anspruch, **dadurch gekennzeichnet, dass** der Saugnapftragrahmen eine kastenartige Konstruktion ist.

3. Schwebe-Handhabungsvorrichtung gemäß einem der vorstehenden Ansprüche, **dadurch gekennzeichnet, dass** der Aktuator ein Paar von Betätigungsmechanismen (16, 45) umfasst, wobei jeder Mechanismus für ein synchrone Einwirkung auf das Ende des Saugnapftragrahmens betrieben wird.

4. Schwebe-Handhabungsvorrichtung gemäß einem der vorstehenden Ansprüche, **dadurch gekennzeichnet, dass** jeder Betätigungsmechanismus (16) mit dem Rahmen über ein Gelenk (42) zum Drehen um eine horizontale Achse verbunden ist, die sich senkrecht zur Drehachse (R) des Saugnapftragrahmens (17) erstreckt.

5. Schwebe-Handhabungsvorrichtung gemäß einem der vorstehenden Ansprüche, **dadurch gekennzeichnet, dass** die angetriebene Rollenvorrichtung (28, 42) ein Rollenbett (8) mit kammartig (25) angeordneten Rollen (27, 30) umfasst, und dass, wenn die Platte aufgenommen oder abgelegt wird, die kammartig (25) angeordneten Rollen die Reihen der Saugnäpfe (19) an dem wiegenartigen Rahmen (17) der Plattenhandhabungsvorrichtung schneiden, wobei sich der Rahmen quer unter den kammartig angeordneten Rollen (25) einfügt.

6. Schwebe-Handhabungsvorrichtung gemäß einem der vorstehenden Ansprüche, **dadurch gekennzeichnet, dass** das Rollenbett (8) der kammartig angeordneten Rollen (25) einen Drehschemel (33) umfasst, der angebracht ist, wenigstens eine halbe Drehung (P) um eine vertikale Achse auszuführen.

7. Schwebe-Handhabungsvorrichtung gemäß vorstehendem Anspruch 5 oder 6, **dadurch gekennzeichnet, dass** der Aktuator (16) zum Anheben/Absenken der Plattenhandhabungsvorrichtung (5) bezogen auf das kammartige Rollenbett (8, 25) einen ruhenden U-förmigen Träger (43) an der Seite aufweist, an der die Platte zu oder von der Verarbeitungsanlage (1) über das Rollenbett bewegt wird (A).

8. Schwebe-Handhabungsvorrichtung gemäß vorstehendem Anspruch 7, **dadurch gekennzeichnet, dass** der anhebende/absenkende Aktuator (16) Führungen (45) aufweist, die zur Aufnahme des U-förmigen Trägers (43) auf einer höheren Ebene als der an der Gegenseite liegende Aktuator angeordnet sind.

9. Schwebe-Handhabungsvorrichtung gemäß einem der vorstehenden Ansprüche 1 bis 4, **dadurch gekennzeichnet, dass** die angetriebene Rollenvorrichtung ein Rollenbett (39) mit zwei Sätzen von Rollen (40, 41) umfasst, deren Achsen sich zueinander kreuzen, wobei der Rollensatz (40) mit seinen Achsen parallel zur Bearbeitungsstraße von einer erhöhten Position über der Straße (1) zu einer zurückgezogenen Position unterhalb der Straße bewegbar ist; wobei die Rollensätze (40, 41) zu unterschiedlichen Phasen gedreht werden, um eine Lade-/Entladebewegung (M) durch die bewegbaren Rollen (40) und um eine Beschickungsbewegung (A) der Straße (1) durch die Rollen (41) auf der Ebene mit der Straße zu erzeugen; wobei der wiegeartige Saugnapftragrahmen (17) der Plattenhandhabungsvorrichtung mit einen Satz von angetriebenen Rollen (36) versehen ist, deren Achsen sich parallel zu den bewegbaren Rollen (40) des Kreuz-Rollenbetts (39) erstrecken; und wobei die Saugnäpfe (35) wenigstens eine kleine Distanz entlang einer Normalen zu der sie enthaltenen Ebene zurücklegen können.

10. Schwebe-Handhabungsvorrichtung gemäß einem der vorstehenden Ansprüchen, **dadurch gekennzeichnet, dass** das Kreuz-Rollenbett (39) mit einem Drehschemel zum Drehen einer vertikalen Achse versehen ist.

## Revendications

1. Dispositif de manipulation aérien (6) de dalles en pierre adapté pour charger/décharger lesdites dalles sur/depuis une ligne de traitement de dalles (1), comprenant : un ensemble de ventouses (19) pour une prise par aspiration d'un côté d'une dalle (6) afin de soulever/déposer la dalle depuis/dans une zone de stockage de dalles (7) ; deux guides suspendus (9) le long desquels un chariot de transport (10) du dispositif de manipulation de dalles est déplacé ; un actionneur pour établir l'élévation du dispositif de manipulation de dalles ; un dispositif (18) pour faire pivoter un cadre portant des ventouses (17) autour d'un axe horizontal ; un dispositif à rouleaux commandés (8, 39) pour recevoir et délivrer la dalle depuis/sur la ligne de traitement de dalles ; **caractérisé en ce que** ledit cadre (17) est une configuration de type berceau adaptée pour positionner lesdites ventouses (19) et la dalle (6) en prise avec ces dernières à proximité de l'axe de pivot horizontal (R), c'est-à-dire à proximité du centre de gravité combiné de la dalle et du cadre portant des ventouses.

2. Dispositif de manipulation aérien de dalles selon la revendication précédente, **caractérisé en ce que** ledit cadre portant des ventouses (17) est une construction de type boîte.

3. Dispositif de manipulation aérien de dalles selon l'une des revendications précédentes, **caractérisé en ce que** l'actionneur comprend une paire de mécanismes d'actionnement (16, 45), chaque mécanisme étant mis en oeuvre pour une action synchrone sur l'extrémité dudit cadre portant des ventouses (19).

4. Dispositif de manipulation aérien de dalles selon la revendication précédente, **caractérisé en ce que** chaque mécanisme d'actionnement (16) est relié de manière articulée (42) audit cadre pour permettre un mouvement de pivotement autour d'un axe horizontal s'étendant perpendiculairement à l'axe de pivot (R) du cadre portant des ventouses (17).

5. Dispositif de manipulation aérien de dalles selon l'une des revendications précédentes, **caractérisé en ce que** le dispositif à rouleaux commandés (28, 32) comprend une plate-forme à rouleaux (8) ayant des rouleaux (27, 30) agencés de manière semblable à un peigne (25), et **en ce que**, lorsque la dalle est soulevée ou déposée, lesdits rouleaux semblables à un peigne croisent les rangées de ventouses (19) sur ledit cadre en forme de berceau (17) du dispositif de manipulation de dalles, ledit cadre s'emboîtant de manière transversale sous lesdits rouleaux semblables à un peigne (25).

6. Dispositif de manipulation aérien de dalles selon la revendication précédente 5, **caractérisé en ce que** ladite plate-forme à rouleaux (8) de rouleaux semblables à un peigne (25) comporte un coupleur d'attelage (33) monté pour effectuer au moins un demi-tour (P) autour d'un axe vertical.

7. Dispositif de manipulation aérien de dalles selon l'une des revendications précédentes 5 ou 6, **caractérisé en ce que** l'actionneur (16) pour soulever/abaisser le dispositif de manipulation de dalles (5) par rapport à ladite plate-forme à rouleaux semblables à un peigne (8, 25) a un montant en forme de U couché (43) du côté où la dalle est déplacée vers/depuis (A) la ligne de traitement (1) sur la plate-forme à rouleaux.

8. Dispositif de manipulation aérien de dalles selon la revendication précédente 7, **caractérisé en ce que** l'actionneur d'élévation/d'abaissement (16) a des guides (45) situés à un niveau plus élevé que l'actionneur latéral opposé pour loger ledit montant en forme de U (43).

9. Dispositif de manipulation aérien de dalles selon l'une des revendications précédentes 1 à 4, **caractérisé en ce que** le dispositif à rouleaux commandés comprend une plate-forme à rouleaux (39) ayant deux ensembles de rouleaux (40, 41) dont les axes se croisent les uns les autres, dans lequel l'ensemble de rouleaux (40) ayant leurs axes parallèles à la ligne de travail sont mobiles d'une position élevée au-dessus de la ligne (1) à une position rétractée au-dessous de la ligne ; les ensembles de rouleaux (40, 41) étant mis en rotation lors de différentes phases pour générer le mouvement de charge/décharge (M) par les rouleaux mobiles (40) et le mouvement d'alimentation (A) de la ligne (1) par les rouleaux (41) au niveau de la ligne ; le cadre portant des ventouses en forme de berceau (17) du dispositif de manipulation de dalles étant muni d'un ensemble de rouleaux commandés (36) dont les axes s'étendent parallèlement auxdits rouleaux mobiles (40) de ladite plate-forme à rouleaux transversale (39) ; et lesdites ventouses (35) pouvant se déplacer au moins sur une courte distance le long d'une direction normale au plan les contenant.

10. Dispositif de manipulation aérien de dalles selon la revendication précédente 9, **caractérisé en ce que** ladite plate-forme à rouleaux transversale (39) est munie d'un coupleur d'attelage pour permettre le mouvement de pivotement autour d'un axe vertical.
